# EUROPEAN PATENT SPECIFICATION

(11) **EP 4 088 432 B1**
(45) Date of publication and mention of the grant of the patent: **11.11.2026**
(21) Application number: 21738667.1
(22) Date of filing: 09.01.2021
(51) Int. Cl.: H04L 51/04, H04L 51/214

(54) **FORWARDING MESSAGES IN DIGITAL COMMUNICATION APPLICATION WITH OR WITHOUT A NOTE TO THE FORWARD MESSAGES**
WEITERLEITUNG VON NACHRICHTEN IN EINER DIGITALEN KOMMUNIKATIONSANWENDUNG MIT ODER OHNE HINWEIS AUF DIE VORWÄRTSNACHRICHTEN
TRANSFERT DE MESSAGES DANS UNE APPLICATION DE COMMUNICATION NUMÉRIQUE ASSORTI OU NON D'UNE NOTE AUX MESSAGES DE TRANSFERT

(30) Priority: 09.01.2020 IN 202041001085
(43) Date of publication of application: 16.11.2022
(73) Proprietor: Kakumanu, Sarath, Tamilnadu Chennai 600018 (IN)
(72) Inventor: Kakumanu, Sarath, Tamilnadu Chennai 600018 (IN)
(74) Representative: JD&P Patent Attorneys Joanna Dargiewicz & Partners
(86) International application number: PCT/IN2021/050025
(87) International publication number: WO 2021/140527

(56) References cited:
- US-A1- 2004 078 445
- US-A1- 2018 255 007
- US-A1- 2020 007 481

## Description

### CROSS-REFERENCE TO RELATED APPLICATION

The present PCT application claims priority to, and the benefit of, Indian application no. 202041001085, which was filed on 09-01-2020.

### TECHNICAL FIELD

The present invention, in general, relates to information technology and computer applications, and more particularly to a digital messaging application for mobile communication devices which can be accessed from all types of communication devices like Mobile phones, Desktop Computers, Laptop Computers, and Digital Tablets.

### BACKGROUND OF THE INVENTION

Mobile communication devices such as Mobile phones, IOS devices, Android devices, along with digital tablets, Desktop computers, Laptop computers are increasingly powerful and the sources of potential incoming/outgoing messages are increasingly more varied. As a result, such mobile communication devices are being designed and built to permit users to accept various types of messages.

Communication Applications include but not limited to WhatsApp, WeChat, Slack, Telegram, Facebook and Google Hangout are becoming increasingly popular among Internet and worldwide web users because they are easy to use and provide a simple way to instantly forward a message. But there are limitations in forwarding a message by the users. In applications like Whatsapp, the message can be forwarded only to limited users (5 no's) at a time. Further, there is no facility to write a personal or official note along with the forward message.

Modern messaging systems on communication devices like smart mobile phones, digital tablets, laptop computers, desktop computers have been increasingly bringing in a wide scope and opportunity for businesses to communicate with their target audience via campaigning offers and discount messages in the messaging systems. For example, instant mobile messaging applications are widely used for sending short messages (business-related messages/personal messages) in a single time to multiple users. But limitations are there like text characters in the conveying message, the number of users selected for receiving the promotional message.

Such conventional messaging technologies permit all parties (i.e. sender and recipient(s)) to specifically identify an originating party from which the message has been transmitted and any recipient party which has received the text message. More particularly, conventional messaging technologies permit each party interacting via messaging to obtain identification credentials for every other party interacting therewith.

Thus, there is a need for a system facilitating a method to handle the forwarding of messages/communication (single message/multiple messages) to a group/individual/ including unknown multiple contacts/unknown group by adding a forward note, thereby addressing certain key challenges in the existing messaging application tools, such as Whatsapp, Facebook Messenger, Google Hangout, WeChat, Slack, Signal, IMO, Telegram, Hike and so on.

While forwarding some kind of 'specific messages' that may be very important the user may require forward note option because it might be helpful to mention about the source (original sender) or about message being forwarded or some personal note- in all these scenarios, the user would like to use the option - 'Forwarding the message with or without note.'

Based on the foregoing, a further need exists for a structured messaging application with a user-friendly messaging application paradigm for forwarding commercial/individual message through a group/individual to an individual/multiple individual/group/multiple groups with or without a note as described in greater detail herein.

Publication US2004078445 AA discloses systems and methods for forwarding full header information in email messages are presented. When an email message is received by a user, and the user chooses to forward the received email message, an option is provided to the user to either include the full header information of the received email in the forwarded email, or to not include the full header information of the received email in the forwarded email. The option may be presented to the user as a user-selectable option, such as a check box that the user can select or de-select.

Publication US2020007481 AA discloses message forwarding method performed at an electronic device having one or more processors and memory storing a plurality of programs for forwarding messages using an instant messaging application, includes: displaying a dialog box including one or more chat messages associated with a first user account of the instant messaging application; selecting one or more chat messages in the dialog box; obtaining message content and associated information of each selected chat message, the associated information including one or more of: a message sender and a sending time of the chat message, a group name of a group corresponding to the dialog box, identifiers of participants of the group; and forwarding the message content and the associated information of each chat message to a second user account of the instant messaging application.

### SUMMARY OF THE INVENTION

An object of the present invention is to overcome the drawbacks of the existing prior art techniques by providing a user-friendly mechanism of addressing the challenges faced by the users while forwarding the messages in an internet-based messaging application.

Another object of the present invention is to allow the users to make their choice of forwarding the message with a note/without note.

It is, therefore, one aspect of the disclosed embodiments to provide for an improved digital messaging application for forwarding the messages in mobile communication devices.

Another aspect of the disclosed embodiments to provide for an improved novel and user-friendly system and method for forwarding messages to an individual/multiple individuals.

One more aspect of the disclosed embodiments to provide for an improved novel and user-friendly system and method for forwarding messages to a group/multiple groups.

One more aspect of the disclosed embodiments to provide for an improved system and method for forwarding messages to an individual /multiple contacts /group/multiple groups/ unknown contacts /unknown group with a forward note.

Another aspect of the disclosed embodiments to provide for an improved system and method for sharing messages to an individual /multiple contacts/group/multiple groups/unknown contacts/unknown group without a forward note.

Further aspect of the disclosed embodiments to provide for an improved method for sharing messages from an individual/group to an individual/multiple individuals/group /multiple groups/unknown contacts/unknown group with or without forward note. The present invention, therefore, is a new and effortless way of forwarding the messages in an internet-based messaging application. It is a new and user-friendly way of forwarding the messages with or without a forward note. The user has the option to choose individual/multiple individuals/groups/multiple groups as per his/her choice. After choosing the contacts the sender further provides the option to add a forward note regarding the forward message as per his/her choice.

The message forward module of the digital messaging application helps the user to forward the single message or multiple messages to anyone in his directory or to a group by choosing his preference of forwarding either with note or without note. Similarly, the message forward module of the structured messaging application helps the user to forward the message received/communicated in a group to any individual user or to another group by choosing his preference of forwarding either with/without a forward note. Once the user selects the message, the user can conveniently use the forward feature to forward the message either with note or without note. In forward message, if the sender prefers to send with note, the receiver can get additional information about the forward message like origin detail/personal note/regarding the message etc. The forwarded message can be an attachment (audio, video, pictures, documents etc).

The aforementioned aspects and other objectives and advantages can now be achieved as described herein. A system and method for forwarding Business/Personal messages (single message/multiple messages) from an individual/group to an individual/group with or without a Note. A message forward feature comprising forwarding the message with a note configured in association with a structured messaging application (Internet Messaging Application) for the user to forward a business message / personal message to a multiple/individual user within the network environment. A messaging server (High-End server) for receiving, processing and forwarding the message with respect to the user from the internet messaging application within the group based on his choice of forwarding preference.

The invention herein relates to a digital messaging application for business communications, individual conversations, business conversations in which forwarding the message with a note (additional information) regarding the message have a significant role. The invention additionally relates to a novel and user-friendly mechanism for forwarding the messages in a network environment. Further, the present invention specifically relates to an improved system and method for forwarding messages to an individual/group by adding a note to the forward message, forwarded between two individuals/multiple individuals/ group/multiple groups.

According to an aspect, the invention relates to a method for forwarding at least one message from a first user (sender) to a second user (receiver) or multiple users or a group of users or multiple group of users, the method comprising all the steps included in appended independent claim 1.

According to another aspect, the invention relates to a system for forwarding a message such as claimed in appended independent claim 4.

According to a further aspect, the invention also relates to a computer program product such as claimed in appended independent claim 7.

According to yet another aspect, the invention relates also to a non-transitory computer readable storage medium storing one or more programs for execution by the one or more processors of a system for forwarding a message such as claimed in appended independent claim 8.

The other aspects of the invention will be apparent from the detailed description that follows.

### BRIEF DESCRIPTION OF THE DRAWINGS

The above and other aspects features and advantages of the embodiments of the present disclosure will be more apparent in the following description taken in conjunction with the accompanying drawings.
FIG. 1 illustrates a graphical representation of the sender internet messaging folder with a three-dot icon, in this case used for forwarding single message, in accordance with the embodiments of the present invention.
FIG.2 illustrates a graphical representation of the sender internet messaging folder with the option to select the message for forwarding single message, in accordance with the embodiments of the present invention.
FIG.3 illustrates a graphical representation of the sender internet messaging folder with the selected single message for forwarding single message, in accordance with the embodiments of the present invention.
FIG.4 illustrates a graphical representation of the sender internet message folder with the forward message count and the option to select the individual/multiple contacts /group/multiple groups/unknown contact/unknown group from the list of contacts and the option to forward the selected message with or without a note, in accordance with the embodiments of the present invention.
FIG.5 illustrates a graphical representation of the sender internet message folder with the selected members of individual from the list of contacts and the option to forward the selected single message, in accordance with the embodiments of the present invention.
FIG.6 illustrates a graphical representation of the sender internet message folder with the selected groups from the list of groups along with the selected members of individual from the list of contacts and the option to forward the selected single message, along with a note, in accordance with the embodiments of the present invention.
FIG.7 illustrates a graphical representation of the sender internet message folder showing forward message along with a note in the individual message folder, in accordance with the embodiments of the present invention.
FIG.8 illustrates a graphical representation of the sender internet message folder showing forward message along with a note in the group message folder, in accordance with the embodiments of the present invention.
FIG.9 illustrates a graphical representation of the sender internet message folder with the selected groups from the list of groups along with the selected members of individual from the list of contacts and the option to forward the selected single message without a note, in accordance with the embodiments of the present invention.
FIG.10 illustrates a graphical representation of the sender internet message folder showing forwarded message without a note in the individual message folder, in accordance with the embodiments of the present invention.
FIG.11 illustrates a graphical representation of the sender internet message folder showing forwarded message without a note in the group message folder, in accordance with the embodiments of the present invention.
FIG.12 illustrates a graphical representation of the sender internet messaging folder with a three-dot icon in this case used for forwarding multiple messages, in accordance with the embodiments of the present invention.
FIG.13 illustrates a graphical representation of the sender internet messaging folder with the option to select the messages for forwarding multiple messages, in accordance with the embodiments of the present invention.
FIG.14 illustrates a graphical representation of the sender internet messaging folder with the selected multiple messages for forwarding multiple messages, in accordance with the embodiments of the present invention.
FIG.15 illustrates a graphical representation of the sender internet message folder with the share message count and the option to select the individual/multiple contacts /group/multiple groups/unknown contacts/unknown group from the list of contacts and the option to forward the selected messages with or without a note, in accordance with the embodiments of the present invention.
FIG.16 illustrates a graphical representation of the sender internet message folder with the selected members of individual from the list of contacts and the option to forward the selected multiple messages, in accordance with the embodiments of the present invention.
FIG.17 illustrates a graphical representation of the sender internet message folder with the selected group from the list of groups along with the selected members of individual from the list of contacts and the option to forward the selected multiple messages with a note, in accordance with the embodiments of the present invention.
FIG.18 illustrates a graphical representation of the sender internet message folder showing the multiple forwarded messages, along with a note in the individual message folder, in accordance with the embodiments of the present invention.
FIG.19 illustrates a graphical representation of the sender internet message folder showing the multiple forwarded messages, along with a note in the group message folder, in accordance with the embodiments of the present invention.
FIG.20 illustrates a graphical representation of the sender internet message folder with the selected group from the list of groups along with the selected members of individual from the list of contacts and the option to forward the selected multiple messages without a note, in accordance with the embodiments of the present invention.
FIG.21 illustrates a graphical representation of the sender internet message folder showing the multiple forwarded messages without a note in the individual message folder, in accordance with the embodiments of the present invention.
FIG.22 illustrates a graphical representation of the sender internet message folder showing the multiple forwarded messages without a note in the group message folder, in accordance with the embodiments of the present invention
FIG.23 illustrates a schematic workflow diagram of forwarding the message in a digital messaging application system, in accordance with the embodiments of the present invention.

Persons skilled in the art will appreciate that elements in the figures are illustrated for simplicity and clarity and may have not been drawn to scale. For example, the dimensions of some of the elements in the figure may be exaggerated relative to other elements to help to improve understanding of various exemplary embodiments of the present disclosure. Throughout the drawings, it should be noted that like reference numbers are used to depict the same or similar elements, features, and structures.

### DETAILED DESCRIPTION

The particular values and configurations discussed in these non-limiting examples can be varied and are cited merely to illustrate at least one embodiment and are not intended to limit the scope thereof.

The embodiments now will be described more fully hereinafter with reference to the accompanying drawings, in which illustrative embodiments of the invention are shown. The embodiments disclosed herein can be embodied in many different forms and should not be construed as limited to the embodiments set forth herein; rather, these embodiments are provided so that this disclosure will be thorough and complete, and will fully convey the scope of the invention to those skilled in the art. As used herein, the term "and/or" includes any and all combinations of one or more of the associated listed items.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

The present invention relates to a novel and user-friendly mechanism of forwarding the messages within the application. This is a system and method for forwarding the messages (single message or multiple messages) to the individual/multiple individuals/group/multiple groups/unknown contacts/unknown groups with or without a forward note.

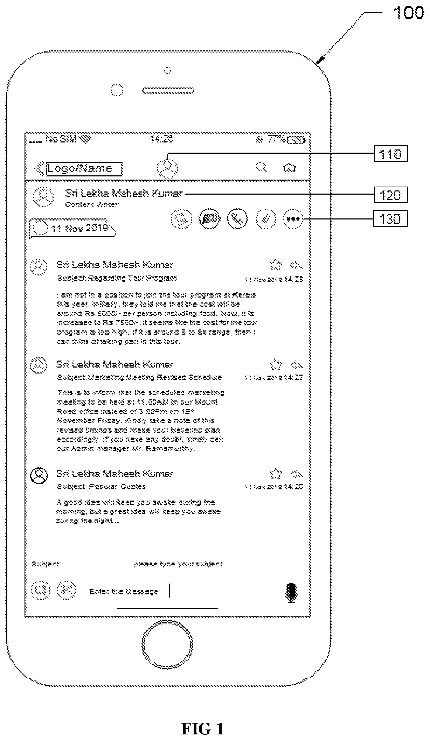

Referring to FIG. 1, an embodiment of the present invention illustrates a graphical representation of the sender internet message folder 100. The folder 100 includes (110) the sender profile icon, (120) the contact name in the contact message folder, (130) the three-dot icon. Clicking the three-dot icon helps to enable the checkbox for every message in the messaging folder for selection, in this case for forwarding single message with/without a note.

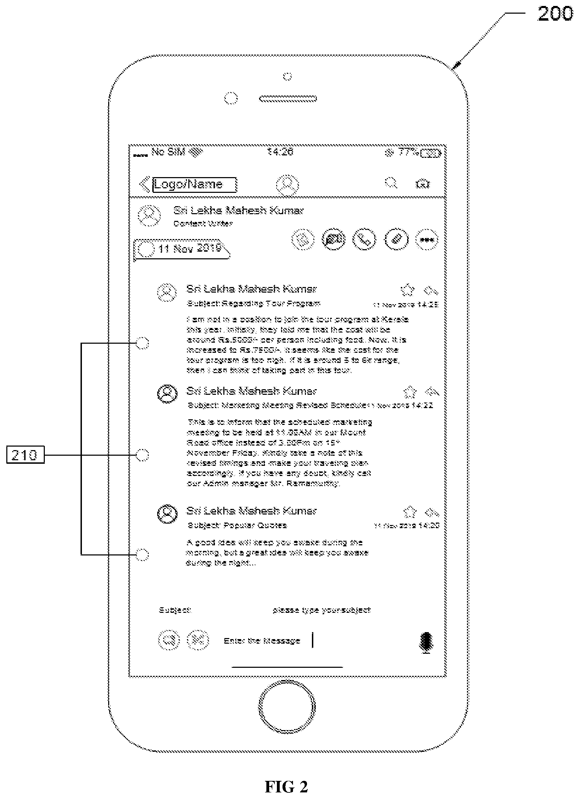

Referring to FIG. 2, an embodiment of the present invention illustrates a graphical representation of the sender internet message folder 200. The folder 200 includes enabled checkbox (210) for all the messages by clicking the three-dot icon for forwarding single message with/without a note.

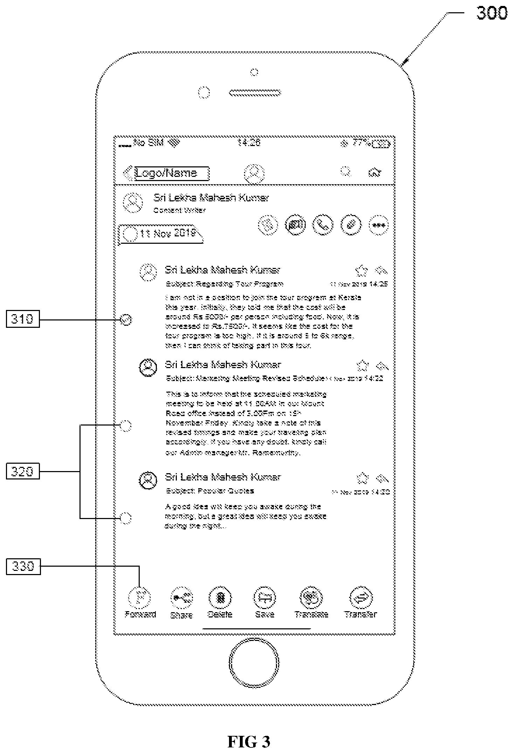

Referring to FIG. 3, an embodiment of the present invention illustrates a graphical representation of the sender internet message folder 300. The folder 300 includes the selected message (310) wherein the user has selected single message for forwarding, (320) the unselected messages, after selecting the forward option messages (330) is viewed along with other features like share, save, translate, transfer, copy, delete etc.

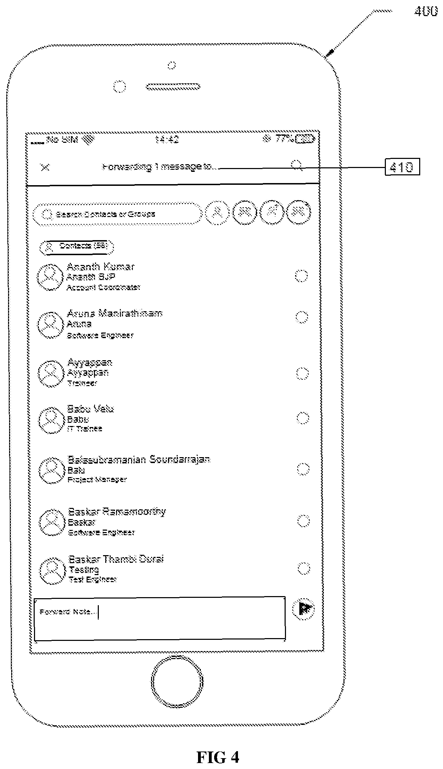

Referring to FIG. 4, an embodiment of the present invention illustrates a graphical representation of the sender internet message folder 400. The folder 400 includes (410) showing the count of the message to be forwarded.

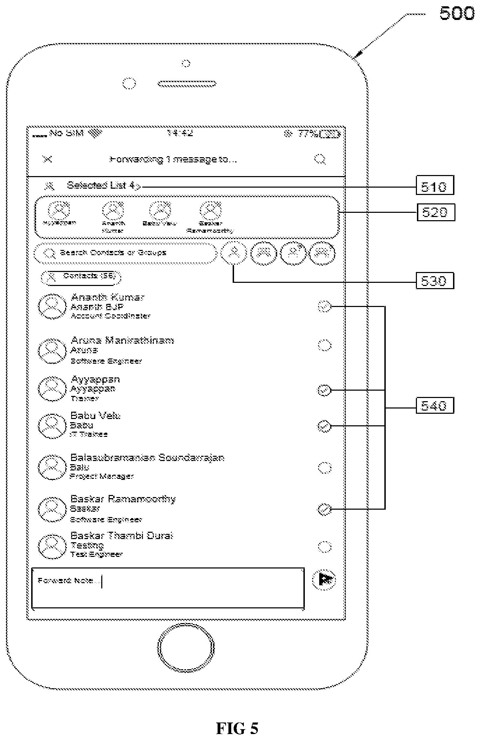

Referring to FIG. 5, an embodiment of the present invention illustrates a graphical representation of the sender internet message folder 500. The folder 500 includes (510) showing the count of the selected individual members from the contact list to which the message to be forwarded, (520) showing the selected individuals contacts in selected list, (530) showing the contact icon, (540) the selected individual contacts from the list of contacts.

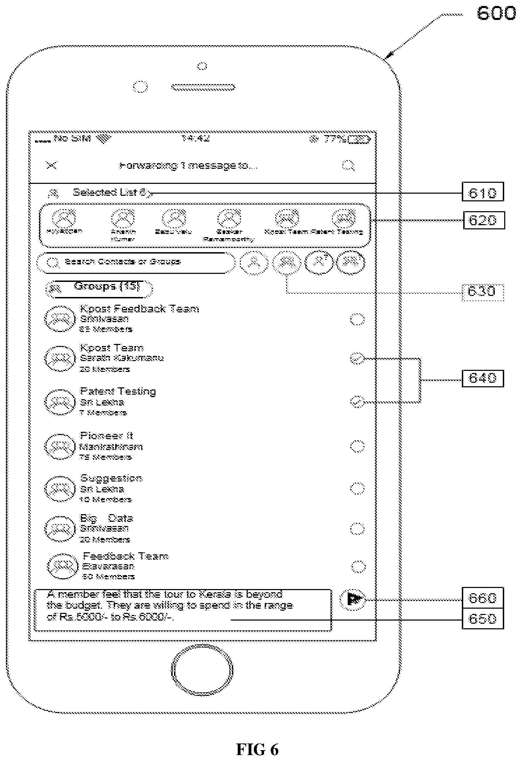

Referring to FIG. 6, an embodiment of the present invention illustrates a graphical representation of the sender internet message folder 600. The folder 600 includes (610) showing the count of selected individual members and groups from the contact list to whom the messages to be forwarded, (620) showing the selected individuals contacts and group contacts in the selected list, (630) showing the group contact icon, (640) the selected group of contacts from the group contact list, (650) the forward note option to send a note regarding the message to be forwarded, (660) the post icon to post the message with a forward note.

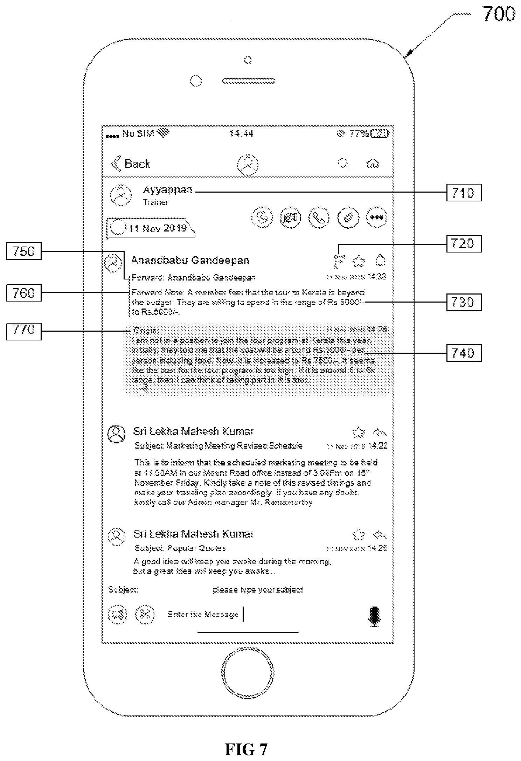

Referring to FIG. 7, an embodiment of the present invention illustrates a graphical representation of the sender internet message folder 700. The folder 700 includes (710) the recipient name (individual member) and profile picture, (720) the forward icon which indicates the message is a forwarded message, (730) the forward note, (740) the forward message, (750) the tag "Forward" indicates the sender name, (760) the tag "Forward Note" indicates the note,(770) the tag "origin" indicates that the message is the original message.

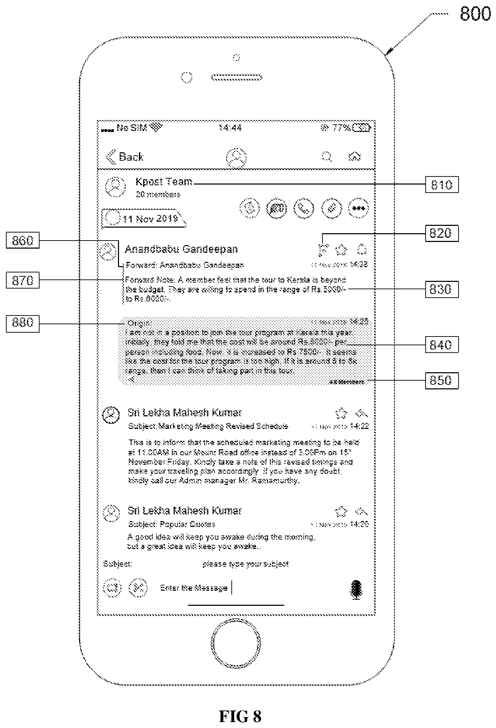

Referring to FIG. 8, an embodiment of the present invention illustrates a graphical representation of the sender internet message folder 800. The folder 800 includes (810) the recipient name (group name with member count )and profile picture, (820) the forward icon which indicates the message is a forwarded message, (830) the forward note, (840) the forward message,(850) shows that the message is forwarded to all members in the group, (860) the tag "Forward" indicates the sender name,(870) the tag "Forward Note" indicates the note,(880) the tag "origin" indicates that the message is the original message.

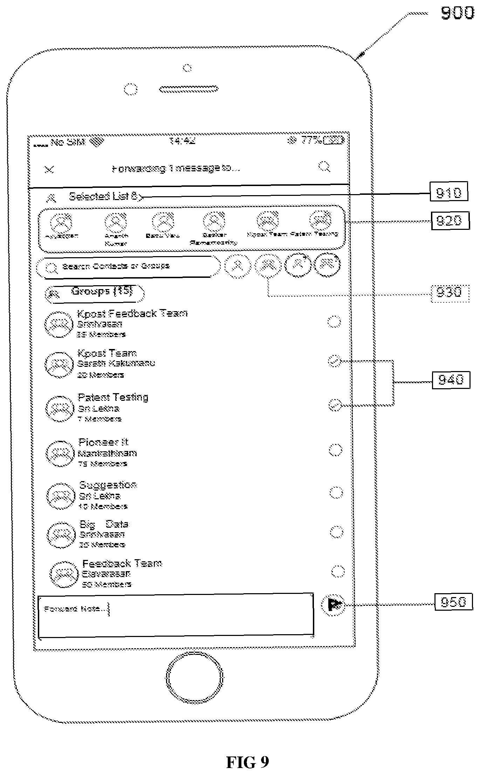

Referring to FIG. 9, an embodiment of the present invention illustrates a graphical representation of the sender internet message folder 900. The folder 900 includes (910) showing the count of selected individual members and groups from the contact list to whom the messages to be forwarded, (920) showing the selected individuals contacts and group contacts in the selected list, (930) showing the group contact icon, (940) the selected group of contacts from the group contact list, (950) the post icon to post the message without a note.

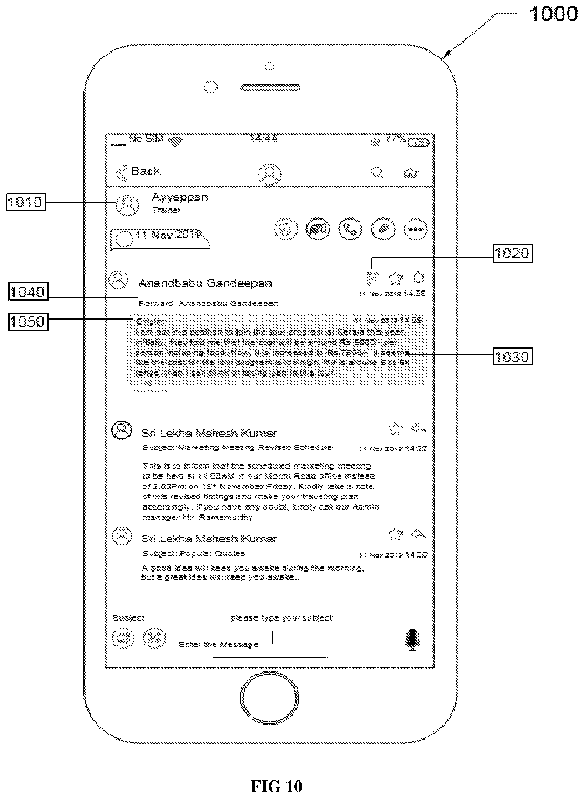

Referring to FIG. 10, an embodiment of the present invention illustrates a graphical representation of the sender internet message folder 1000. The folder 1000 includes (1010) the recipient name (individual member) and profile picture the (1020) the forward icon which indicates the message is a forward message with hidden source, (1030) the tag "origin" indicates that the message is the original message, (1040) the forward message without the note, (1050) the tag "Forward" indicates the sender name.

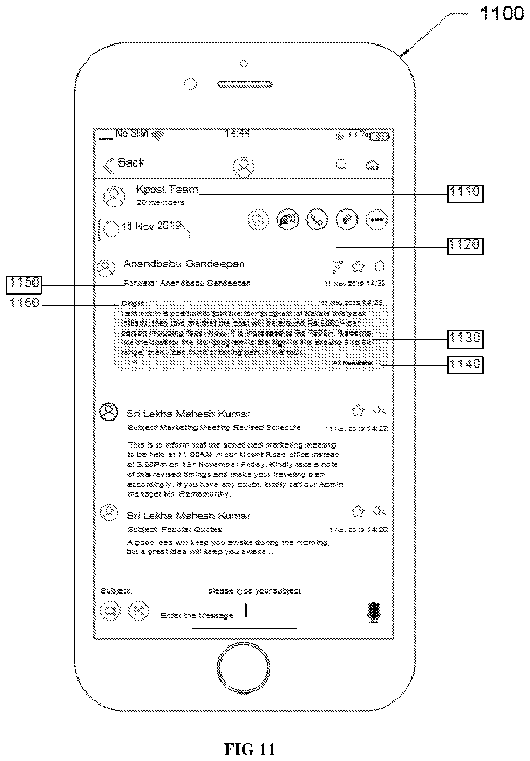

Referring to FIG. 11, an embodiment of the present invention illustrates a graphical representation of the sender internet message folder 1100. The folder 1100 includes (1110) (the recipient name (group name) and profile picture, (1120) the forward icon which indicates the message is a forward message with hidden source, (1130) the forward message without the note, (1040) shows that the message is forwarded to all members in the group ,(1150) the tag "Forward" indicates the sender name, (1160) the tag "origin" indicates that the message is the original message.

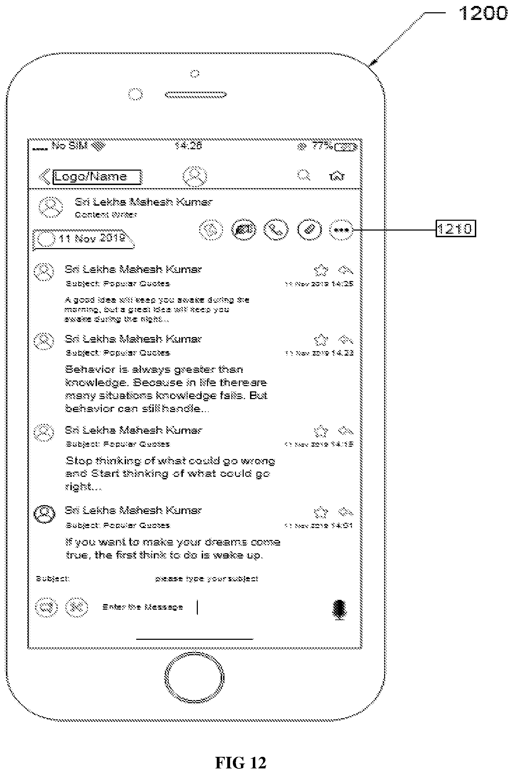

Referring to FIG. 12, an embodiment of the present invention illustrates a graphical representation of the sender internet message folder 1200. The folder 1200 includes the three-dot icon (1210). Clicking the three-dot icon helps to enable the checkbox for every message in the messaging folder for selection, in this case for forwarding multiple messages with/without a note.

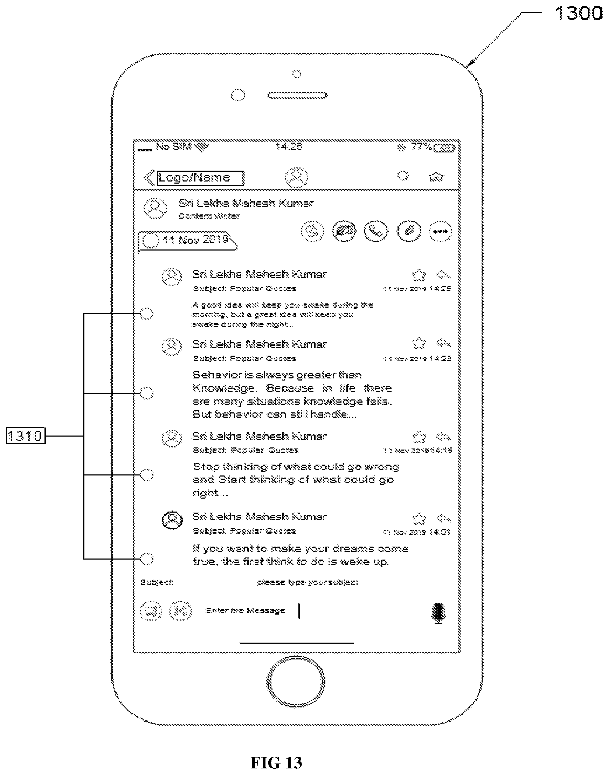

Referring to FIG. 13, an embodiment of the present invention illustrates a graphical representation of the sender internet message folder 1300. The folder 1300 includes (1310) the enabled checkbox for all the messages by clicking the three-dot icon for forwarding multiple messages with/without a note.

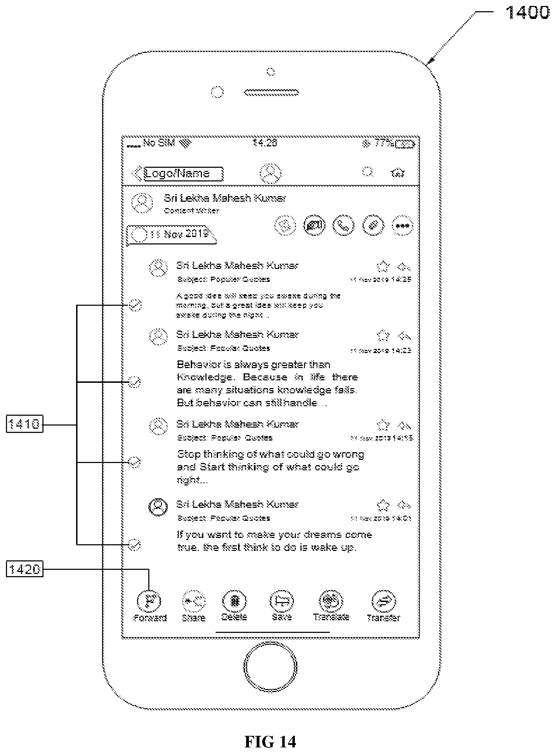

Referring to FIG. 14, an embodiment of the present invention illustrates a graphical representation of the sender internet message folder 1400. The folder 1400 includes the selected messages (1410) wherein the user has selected multiple messages for forwarding, after selecting the multiple message (1420) the forward option is viewed along with other features like share, save, translate, transfer, copy, delete etc.

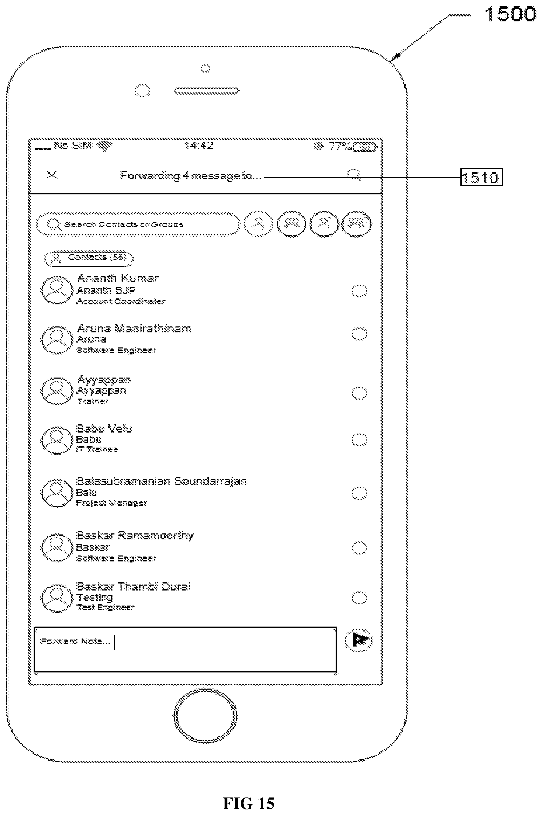

Referring to FIG. 15, an embodiment of the present invention illustrates a graphical representation of the sender internet message folder 1500. The folder 1500 includes (1510) showing the count of the messages to be forwarded with/without a note.

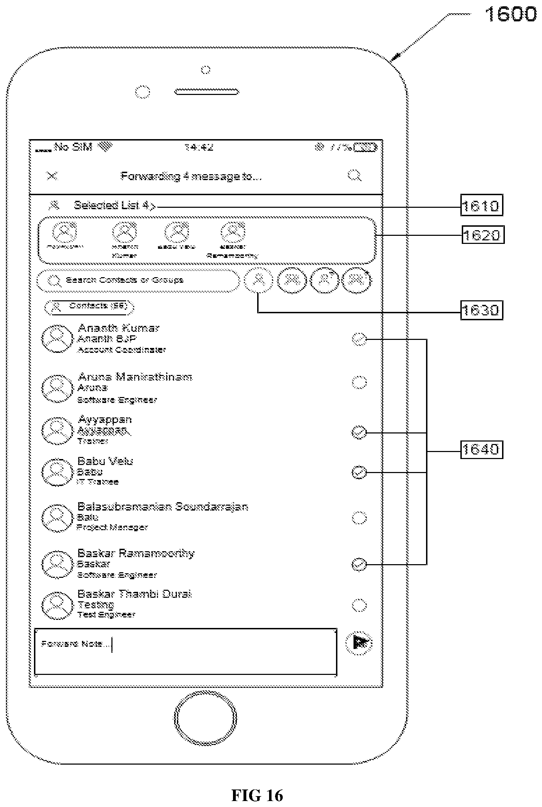

Referring to FIG. 16, an embodiment of the present invention illustrates a graphical representation of the sender internet message folder 1600. The folder 1600 includes (1610) showing the count of the selected members of individual from the contact list to whom the message to be forwarded, (1620) showing the selected members of individuals in the selected list, (1630) showing the contact icon, (1640) the selected individual contacts.

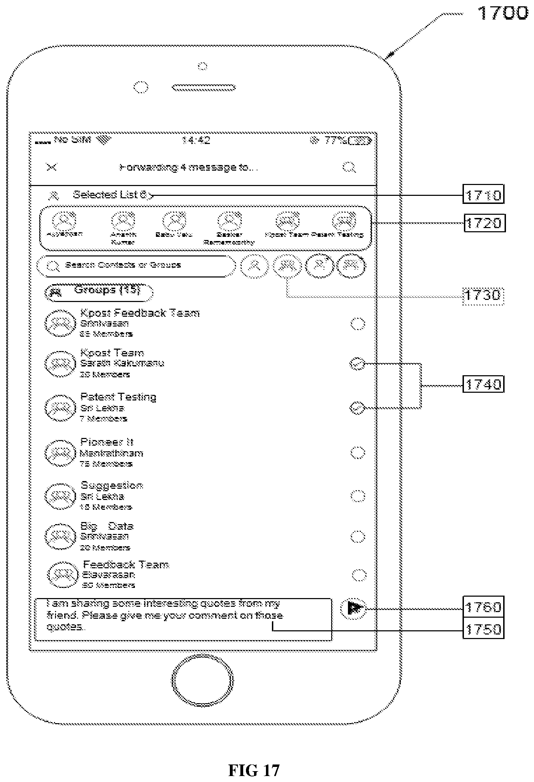

Referring to FIG. 17, an embodiment of the present invention illustrates a graphical representation of the sender internet message folder 1700. The folder 1700 includes (1710) showing the count of selected members of individual and selected groups from the contact list to whom the messages to be forwarded with a note, (1720) showing the selected individuals contacts and group contacts, (1730) showing the group contact icon, (1740) the selected group contacts, (1750) the forward note option to send a note regarding the message to be forwarded, (1760) the post icon to post the message with a forward note.

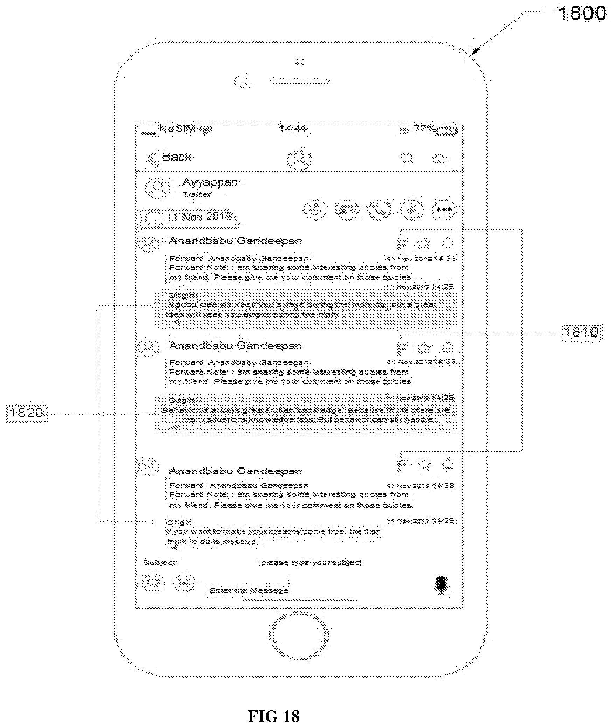

Referring to FIG. 18, an embodiment of the present invention illustrates a graphical representation of the sender internet message folder 1800. The folder 1800 includes (1810) the forward icon which indicates the messages are forwarded messages, (1820) the forward message with a note.

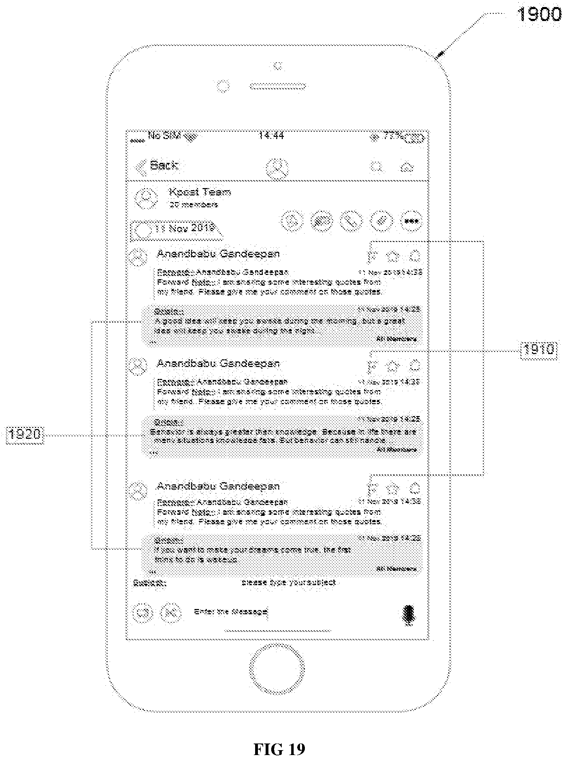

Referring to FIG. 19, an embodiment of the present invention illustrates a graphical representation of the sender internet message folder 1900. The folder 1900 includes (1910) the forward icon which indicates the messages are forwarded messages, (1920) shows that the multiple messages are forwarded to all members in the group with a note.

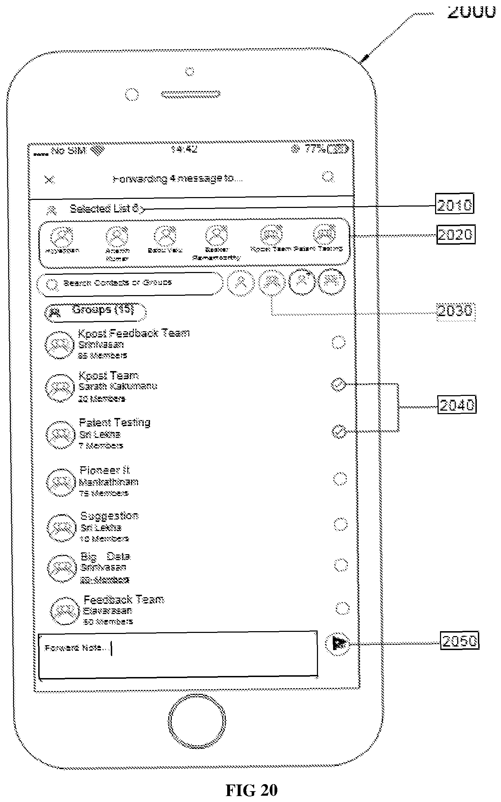

Referring to FIG. 20, an embodiment of the present invention illustrates a graphical representation of the sender internet message folder 2000. The folder 2000 includes (2010) showing the count of selected members of individual and selected groups from the contact list to whom the messages to be forwarded with a note, (2020) showing the selected individuals contacts and group contacts, (2030) showing the group contact icon, (2040) the selected group contacts, (2050) the post icon to post the message without a forward note.

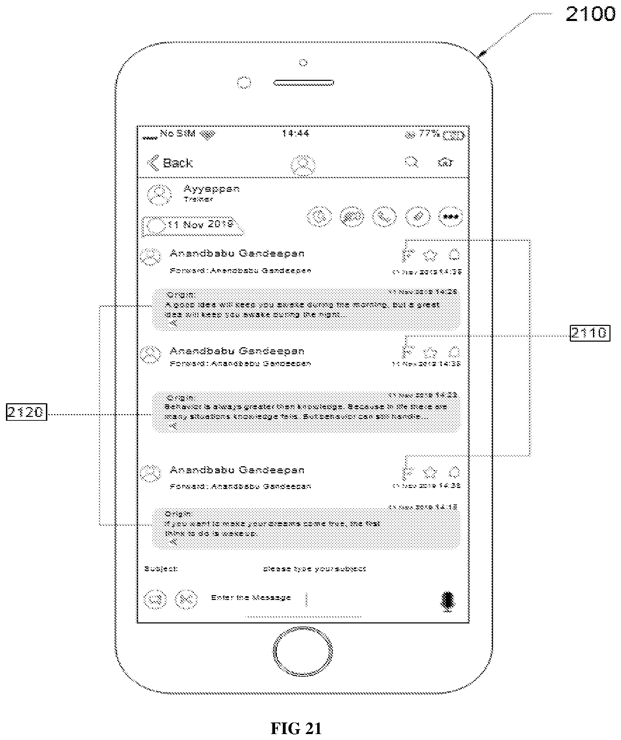

Referring to FIG. 21, an embodiment of the present invention illustrates a graphical representation of the sender internet message folder 2100. The folder 2100 includes (2110) the forward icon which indicates the messages are forwarded messages, (2120) the forward message without a forward note, in accordance with the disclosed embodiments.

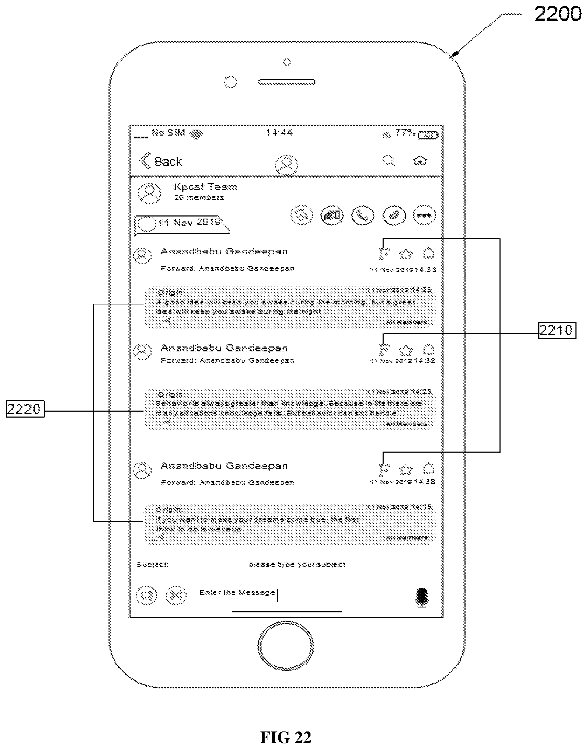

Referring to FIG. 22, an embodiment of the present invention illustrates a graphical representation of the sender internet message folder 2200. The folder 2200 includes (2210) the forward icon which indicates the messages are forwarded messages, (2220) multiple messages are forwarded to all members in the group message without a forward note, in accordance with the disclosed embodiments.

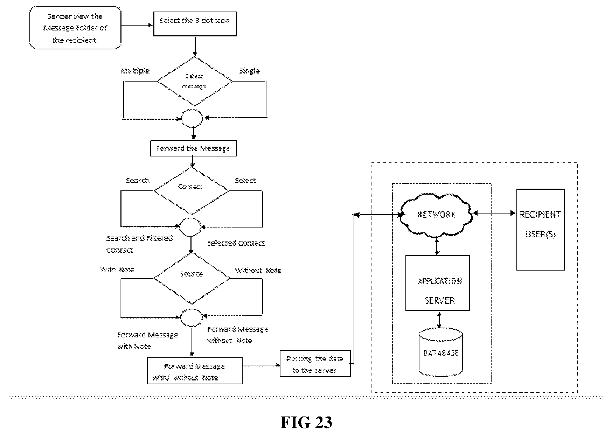

Referring to FIG. 23, according to an embodiment, a method for sharing at least one message or more than one message from the sender side to the receiver side has been provided and shown.

The sender is an individual /group member. The receiver is an individual/multiple individual/group/multiple groups. The method comprises selecting a single message or multiple messages by the sender from a sender device, searching and selecting of the receiver (individual/multiple individual/group/multiple groups) by the sender and forwarding the selected single message or multiple messages, and forwarding the selected single message or more than one message from the sender device to the receiver device (mobile phones, laptop computers, desktop computers, digital tablets, etc) of the selected receiver (individual/multiple individual/group/multiple groups). The sender device includes but not limited to mobile phones, laptop computers, desktop computers, digital tablets etc.

The interface of the sender device provides option for forwarding a selected single message or more than one message by adding note or without note. According to the option selected by the sender (adding a note or without adding a note), the receiver receives the forward message, by the receiver device of the selected receiver (individual/multiple individual/group/multiple groups). In an embodiment, the sender is an individual or a user of a group of users.

According to another embodiment, a system for forwarding a message is provided. The system comprises a sender device of a sender configured to send and receive the forward messages using an interface, a receiver device of a receiver configured to send and receive forward messages using an interface, and a server unit communicably coupled to the sender device and the receiver device (the sender and receiver device includes mobile phones, laptop computers, desktop computers, digital tablets, etc). The server unit is configured to receive, process and forward the messages to and from the sender device and the receiver device. The sender device is configured to select, one message/multiple messages, search and select, at least one-second user or a plurality of users or a group of users or a plurality of group of users, and forward the selected message using an interface of the sender device. The interface of the sender device comprises, selecting single message or multiple message by the sender, for forwarding the selected message by adding with or without note to a receiver device of a second user or a plurality of users or a group of users or a plurality of group of users, according to the forward option done by the first user (sender), wherein the first receiver device is configured to receive the forward message from the first sender device.

According to another embodiment, a computer program product comprising instructions is provided which, when executed by at least one processor, causes the processor to carry out the instructions for selecting, at least one message, by the first user from a sender device, searching and selecting, at least one second user or a plurality of users or a group of users or a plurality of group of users, by the first user (sender) from the sender device, and forwarding, at least one selected message by the first user from the sender device by adding a note or without note, using an interface of the sender device. The interface of the sender device comprises providing, to the first user an option for selecting the single message or multiple messages, forwarding the selected single or multiple messages with note or without note from the sender device to the receiver device of the selected one-second user or a plurality of users or a group of users or a plurality of group of users, according to the option selected by the first user and receiving the forward message by the receiver device of the selected at least one-second user or a plurality of users or a group of users or a plurality of group of users, according to the option selected by the first user.

Another embodiment teaches a non-transitory computer-readable storage medium storing one or more programs for execution by the one or more processors of a system for forwarding a message, the one or more programs including instructions for selecting, one message or more than one message, by the first user from a sender device, searching and selecting, one-second user or a plurality of users or a group of users or a plurality of group of users by the first user from the sender device and forwarding one selected message or more than one message by the sender from the sender device, using an interface of the sender device, wherein the interface of the sender device comprises providing, to the first user, an option to add note for forwarding one selected message or more than one message, to a first receiver device of a one-second user or a plurality of users or a group of users or a plurality of group of users. Forwarding the message from the sender device to the receiver device of the selected at least one-second user or a plurality of users or a group of users or a plurality of group of users, with the option of adding the note or without note. The forward message is received by the first receiver device of the selected one-second user or a plurality of users or a group of users or a plurality of group of users, according to the option selected by the first user.

In the aforementioned embodiments, selecting at least one message, by the sender comprises selecting a message or a plurality of messages received by the first user from other users in the sender device, the option of adding note for forwarding the message comprises forwarding the message from the interface of the sender device, by adding note to the selected one message or more than one message or option for forwarding the message, from the interface of the sender device, of selected one message or more than one message without a note, forwarding the message comprises adding a subject note, by the first user, with the at least one message or more than one message selected by the first user for forwarding to the selected one-second user or a plurality of users or a group of users or a plurality of group of users.

It will be appreciated that variations of the above-disclosed and other features and functions, or alternatives thereof, may be desirably combined into many other different systems or applications as long as they fall within the scope of the claims.

## Claims

1. A method for forwarding at least one instant message (310) from a first user (110), sender, to a second user (710), receiver, or multiple users (540, 1640) or a group of users (640, 1740) or multiple group of users (940, 2040), the method comprising:
selecting, at least one message (310) or more than one message (1410), by the first user (110) from a first sender device (100, 1400);
searching and selecting, at least one second user (710), receiver, or multiple users (540, 1640) or a group of users (640, 1740) or multiple group of users (940, 2040), by the first user (110) from the first sender device (500, 600, 900, 1600, 1700, 2000);
forwarding, the at least one selected message (310) or more than one message (1410) by the first user (110), sender, from the first sender device (100, 300, 1400), using an interface (130, 330, 660, 950, 1210, 1420, 1760) of the first sender device (100, 300, 600, 900, 1400, 1700, 2000),
to a first receiver device of a selected second user (710), receiver, or multiple users (540, 1640) or a group of users (640, 1740) or multiple group of users (940, 2040), according to an option (650, 1750) selected by the first user (110); and
receiving the forwarded at least one message (740, 840, 1030, 1130) or more than one message (1820, 1920, 2120,2220), by the first receiver device of the selected at least one second user (710), receiver, or multiple users (540, 1640) or a group of users (640, 1740) or multiple group of users (940, 2040),
wherein the first user (110) is an individual or a user of the group of users and wherein the interface (130, 330, 660, 950, 1210, 1420, 1760) of the first sender device (100, 300, 1400) is configured to provide, to the first user(110), an option (650, 1750) for forwarding (660, 950, 1760, 2050) one (310) or more selected messages (1410) with (650, 730, 830, 1750, 1820, 1920) or without a note (950, 1040, 1130, 2050, 2120, 2220)

2. The method as claimed in claim 1, wherein selecting at least one message by the first user (110) comprises selecting a message (310) or a plurality of messages (1410) received by the first user (110) from other users in the first sender device (100, 300, 600, 900, 1400, 1700, 2000).

3. The method as claimed in any one of claims 1-2, further comprising adding a note (650, 1750), by the first user (110), with the selected message(s) (310, 1410) for forwarding (660, 950, 1760, 2050) to the selected at least one second user (710) or multiple users (540, 1640) or a group of users (640, 1740) or multiple group of users (940, 2040).

4. A system for forwarding at least an instant message, the system comprising:
a first sender device (100, 1400) of a first user (110) configured to send and receive messages using an interface;
at least one first receiver device (700) of a second user configured to send and receive messages using an interface;
a server unit (2300) communicably coupled to the first sender device (100, 1400) and the first receiver device (700), the server unit being configured to receive, process, and forward the messages to and from the first sender device (100, 1400) and the first receiver device (700), andwherein the first user and second user are individual users or a user of a group of users, wherein the first sender device (100, 1400) is configured to:
receive a selection, by the first user, of at least one message or more than one message;
search and receive the selection of at least one second user, receiver, or multiple users or a group of users or multiple group of users;
receive a selection of an option for forwarding the selected at least one message or more than one message; and
forward, the selected at least one message or more than one message, according to the selected option, to at least one receiver device (700) of the selected at least one second user, receiver, or group of users;
wherein the first receiver device (700) is configured to receive the forwarded at least one message or more than one message;
wherein the interface of the first sender device (100, 1400) is further configured to provide an option, to the first user, for forwarding one or more selected messages with or without a note.

5. The system as claimed in claim 4, wherein the first sender device (100, 1400) is configured to select one or more messages received by the first user from other users.

6. The system as claimed in claim 4, wherein the server unit (2300) is located on a cloud platform or on premise for receiving, processing and sending forward messages.

7. A computer program product comprising instructions which, when executed by at least one processor, causes the processor to carry out for the method of claim 1.

8. A non-transitory computer readable storage medium the computer program of claim 7.

## Patentansprüche

1. Verfahren zum Weiterleiten mindestens einer Sofortnachricht (310) von einem ersten Benutzer (110), Sender, an einen zweiten Benutzer (710), Empfänger, oder an mehrere Benutzer (540, 1640) oder an eine Gruppe von Benutzern (640, 1740) oder an mehrere Gruppen von Benutzern (940, 2040), wobei das Verfahren umfasst:
Auswählen mindestens einer Nachricht (310) oder von mehr als einer Nachricht (1410) durch den ersten Benutzer (110) an einer ersten Sendevorrichtung (100, 1400);
Suchen und Auswählen mindestens eines zweiten Benutzers (710), Empfänger, oder mehrerer Benutzer (540, 1640) oder einer Gruppe von Benutzern (640, 1740) oder mehrerer Gruppen von Benutzern (940, 2040) durch den ersten Benutzer (110) an der ersten Sendevorrichtung (500, 600, 900, 1600, 1700, 2000);
Weiterleiten der mindestens einen ausgewählten Nachricht (310) oder von mehr als einer Nachricht (1410) durch den ersten Benutzer (110), Sender, von der ersten Sendevorrichtung (100, 300, 1400) unter Verwendung einer Schnittstelle (130, 330, 660, 950, 1210, 1420, 1760) der ersten Sendevorrichtung (100, 300, 600, 900, 1400, 1700, 2000)
an eine erste Empfangsvorrichtung eines ausgewählten zweiten Benutzers (710), Empfänger, oder mehrerer Benutzer (540, 1640) oder einer Gruppe von Benutzern (640, 1740) oder mehrerer Gruppen von Benutzern (940, 2040) gemäß einer von dem ersten Benutzer (110) ausgewählten Option (650, 1750); und
Empfangen der weitergeleiteten mindestens einen Nachricht (740, 840, 1030, 1130) oder von mehr als einer Nachricht (1820, 1920, 2120, 2220) durch die erste Empfangsvorrichtung des ausgewählten mindestens einen zweiten Benutzers (710), Empfänger, oder mehrerer Benutzer (540, 1640) oder einer Gruppe von Benutzern (640, 1740) oder mehrerer Gruppen von Benutzern (940, 2040),
wobei der erste Benutzer (110) eine Einzelperson oder ein Benutzer der Gruppe von Benutzern ist und wobei die Schnittstelle (130, 330, 660, 950, 1210, 1420, 1760) der ersten Sendevorrichtung (100, 300, 1400) dazu ausgebildet ist, dem ersten Benutzer (110) eine Option (650, 1750) zum Weiterleiten (660, 950, 1760, 2050) einer (310) oder mehrerer ausgewählter Nachrichten (1410) mit (650, 730, 830, 1750, 1820, 1920) oder ohne Notiz (950, 1040, 1130, 2050, 2120, 2220) bereitzustellen.

2. Verfahren nach Anspruch 1, wobei das Auswählen mindestens einer Nachricht durch den ersten Benutzer (110) das Auswählen einer Nachricht (310) oder einer Vielzahl von Nachrichten (1410) umfasst, die der erste Benutzer (110) von anderen Benutzern in der ersten Sendevorrichtung (100, 300, 600, 900, 1400, 1700, 2000) empfangen hat.

3. Verfahren nach einem der Ansprüche 1 bis 2, ferner umfassend ein Hinzufügen einer Notiz (650, 1750) durch den ersten Benutzer (110) zu der/den ausgewählten Nachricht(en) (310, 1410) zum Weiterleiten (660, 950, 1760, 2050) an den ausgewählten mindestens einen zweiten Benutzer (710) oder an mehrere Benutzer (540, 1640) oder an eine Gruppe von Benutzern (640, 1740) oder an mehrere Gruppen von Benutzern (940, 2040).

4. System zum Weiterleiten mindestens einer Sofortnachricht, wobei das System umfasst:
eine erste Sendevorrichtung (100, 1400) eines ersten Benutzers (110), die dazu ausgebildet ist, unter Verwendung einer Schnittstelle Nachrichten zu senden und zu empfangen;
mindestens eine erste Empfangsvorrichtung (700) eines zweiten Benutzers, die dazu ausgebildet ist, unter Verwendung einer Schnittstelle Nachrichten zu senden und zu empfangen;
eine Servereinheit (2300), die kommunikativ mit der ersten Sendevorrichtung (100, 1400) und der ersten Empfangsvorrichtung (700) gekoppelt ist, wobei die Servereinheit dazu ausgebildet ist, die Nachrichten an die und von der ersten Sendevorrichtung (100, 1400) und der ersten Empfangsvorrichtung (700) zu empfangen, zu verarbeiten und weiterzuleiten, und wobei der erste Benutzer und der zweite Benutzer Einzelbenutzer oder Benutzer einer Gruppe von Benutzern sind, wobei die erste Sendevorrichtung (100, 1400) dazu ausgebildet ist,from the first sender device (100, 1400) and the first receiver device (700), and wherein the first user and second user are individual users or a user of a group of users, wherein the first sender device (100, 1400) is configured to:
eine Auswahl mindestens einer Nachricht oder von mehr als einer Nachricht durch den ersten Benutzer zu empfangen;
mindestens einen zweiten Benutzer, Empfänger, oder mehrere Benutzer oder eine Gruppe von Benutzern oder mehrere Gruppen von Benutzern zu suchen und die Auswahl davon zu empfangen;
eine Auswahl einer Option zum Weiterleiten der ausgewählten mindestens einen Nachricht oder von mehr als einer Nachricht zu empfangen; und
die ausgewählte mindestens eine Nachricht oder mehr als eine Nachricht gemäß der ausgewählten Option an mindestens eine Empfangsvorrichtung (700) des ausgewählten mindestens einen zweiten Benutzers, Empfänger, oder der ausgewählten Gruppe von Benutzern weiterzuleiten;
wobei die erste Empfangsvorrichtung (700) dazu ausgebildet ist, die weitergeleitete mindestens eine Nachricht oder mehr als eine Nachricht zu empfangen;
wobei die Schnittstelle der ersten Sendevorrichtung (100, 1400) ferner dazu ausgebildet ist, dem ersten Benutzer eine Option zum Weiterleiten einer oder mehrerer ausgewählter Nachrichten mit oder ohne Notiz bereitzustellen.

5. System nach Anspruch 4, wobei die erste Sendevorrichtung (100, 1400) dazu ausgebildet ist, eine oder mehrere Nachrichten auszuwählen, die der erste Benutzer von anderen Benutzern empfangen hat.

6. System nach Anspruch 4, wobei die Servereinheit (2300) auf einer Cloud-Plattform oder lokal (on premise) angeordnet ist, um Nachrichten zu empfangen, zu verarbeiten und weiterzuleiten.

7. Computerprogrammprodukt, umfassend Befehle, die bei Ausführung durch mindestens einen Prozessor den Prozessor veranlassen, das Verfahren nach Anspruch 1 auszuführen.

8. Nichtflüchtiges computerlesbares Speichermedium, auf dem das Computerprogramm nach Anspruch 7 gespeichert ist.

## Revendications

1. Procédé permettant de transférer au moins un message instantané (310) d'un premier utilisateur (110), expéditeur, à un deuxième utilisateur (710), destinataire, ou vers plusieurs utilisateurs (540, 1640), ou vers un groupe d'utilisateurs (640, 1740), ou vers plusieurs groupes d'utilisateurs (940, 2040), le procédé comprenant :
la sélection, par le premier utilisateur (110), d'au moins un message (310) ou de plusieurs messages (1410) à partir d'un premier dispositif d'expéditeur (100, 1400);
la recherche et la sélection, par le premier utilisateur (110) à partir du premier dispositif émetteur (500, 600, 900, 1600, 1700, 2000) d'au moins un second utilisateur (710), destinataire, ou de plusieurs utilisateurs (540,1640) ou un groupe d'utilisateurs (640, 1740) ou un groupe de plusieurs utilisateurs (940, 2040);
le transfert de l'au moins un message sélectionné (310) ou de plusieurs messages (1410) par le premier utilisateur (110), expéditeur, depuis le premier dispositif émetteur (100, 300, 1400), à l'aide d'une interface (130, 330, 660, 950, 1210, 1420, 1760) du premier dispositif émetteur (100, 300, 600, 900, 1400, 1700, 2000),
à un premier dispositif récepteur d'un deuxième utilisateur sélectionné (710), destinataire, ou de plusieurs utilisateurs (540, 1640), ou d'un groupe d'utilisateurs (640, 1740) ou de plusieurs groupes d'utilisateurs (940, 2040), selon une option (650, 1750) choisie par le premier utilisateur (110) ; et
la réception d'au moins un message transféré (740, 840, 1030, 1130) ou de plusieurs messages (1820, 1920, 2120, 2220), par le premier dispositif récepteur dudit au moins un deuxième utilisateur (710), récepteur, ou de plusieurs utilisateurs (540, 1640), ou d'un groupe d'utilisateurs (640, 1740), ou de plusieurs groupes d'utilisateurs (940, 2040),
le premier utilisateur (110) étant un individu ou un utilisateur du groupe d'utilisateurs, et l'interface (130, 330, 660, 950, 1210, 1420, 1760) du premier dispositif émetteur (100, 300, 1400) est configurée pour proposer au premier utilisateur (110) une option (650, 1750) permettant de transférer (660, 950, 1760, 2050) un (310) ou plusieurs messages sélectionnés (1410) avec (650, 730, 830, 1750, 1820, 1920) ou sans note (950, 1040, 1130, 2050, 2120, 2220).

2. Procédé selon la revendication 1, dans lequel la sélection d'au moins un message par le premier utilisateur (110) comprend la sélection d'un message (310) ou d'une pluralité de messages (1410) reçus par le premier utilisateur (110) de la part d'autres utilisateurs dans le premier dispositif émetteur (100, 300, 600, 900, 1400, 1700, 2000).

3. Procédé selon l'une quelconque des revendications 1 à 2, comprenant en outre l'ajout d'une note (650, 1750), par le premier utilisateur (110), au(x) message(s) sélectionné(s) (310, 1410) en vue de leur transfert (660, 950, 1760, 2050) à au moins un deuxième utilisateur (710) ou plusieurs utilisateurs (540, 1640) ou un groupe d'utilisateurs (640, 1740) ou plusieurs groupes d'utilisateurs (940, 2040) sélectionnés.

4. Système destiné à transférer au moins un message instantané, le système comprenant :
un premier dispositif émetteur (100, 1400) d'un premier utilisateur (110) configuré pour envoyer et recevoir des messages à l'aide d'une interface ;
au moins un premier dispositif récepteur (700) d'un deuxième utilisateur, configuré pour envoyer et recevoir des messages à l'aide d'une interface ;
une unité serveur (2300) couplée de manière communicante au premier dispositif émetteur (100, 1400) et au premier dispositif récepteur (700), l'unité serveur étant configurée pour recevoir, traiter et transférer les messages vers et à s provenant du premier dispositif émetteur (100, 1400) et du premier dispositif récepteur (700), et dans lequel le premier utilisateur et le deuxième utilisateur sont des utilisateurs individuels ou un utilisateur faisant partie d'un groupe d'utilisateurs, dans lequel le premier dispositif émetteur (100, 1400) est configuré pour :
recevoir une sélection, effectuée par le premier utilisateur, d'au moins un message ou de plusieurs messages ;
rechercher et recevoir la sélection d'au moins un deuxième utilisateur, d'un destinataire, de plusieurs utilisateurs, d'un groupe d'utilisateurs ou de plusieurs groupes d'utilisateurs ;
recevoir une sélection d'une option permettant de transférer le ou les messages sélectionnés ; et
transférer le ou les messages sélectionnés, conformément à l'option choisie, vers au moins un dispositif récepteur (700) du ou des seconds utilisateurs, destinataires ou groupes d'utilisateurs sélectionnés ;
dans lequel le premier dispositif récepteur (700) est configuré pour recevoir le ou les messages transférés ;
dans lequel l'interface du premier dispositif émetteur (100, 1400) est en outre configurée pour proposer au premier utilisateur une option permettant de transférer un ou plusieurs messages sélectionnés, avec ou sans note.

5. Système selon la revendication 4, dans lequel le premier dispositif émetteur (100, 1400) est configuré pour sélectionner un ou plusieurs messages reçus par le premier utilisateur de la part d'autres utilisateurs.

6. Système selon la revendication 4, dans lequel l'unité serveur (2300) est située sur une plateforme cloud ou sur site pour recevoir, traiter et transférer des messages.

7. Programme d'ordinateur comprenant des instructions qui, lorsqu'elles sont exécutées par au moins un processeur, amènent ce dernier à mettre en œuvre le procédé selon la revendication 1.

8. Support de stockage non transitoire lisible par un ordinateur, contenant le programme informatique selon la revendication 7.
